Europäisches Patentamt

European Patent Office

Office européen des brevets

(19)

(11) Numéro de publication: **0 237 115**
**B1**

(12) # FASCICULE DE BREVET EUROPEEN

(45) Date de publication du fascicule du brevet:
23.05.90

(51) Int. Cl.⁵: **G06F 15/68, H04N 5/14**

(21) Numéro de dépôt: **87200362.9**

(22) Date de dépôt: **02.03.87**

(54) Procédé de renforcement de transitions de signaux numériques et dispositif de traitement pour la mise en oeuvre dudit procédé.

(30) Priorité: **11.03.86 FR 8603425**

(43) Date de publication de la demande:
**16.09.87 Bulletin 87/38**

(45) Mention de la délivrance du brevet:
**23.05.90 Bulletin 90/21**

(84) Etats contractants désignés:
**DE FR GB IT SE**

(56) Documents cités:
**US-A- 3 800 077**

**PROCEEDINGS, 17th ANNUAL ALLERTON CONFERENCE ON COMMUNICATION, CONTROL, AND COMPUTING, 10-12 octobre 1979, Illinois, pages 886-895, sponsorisé par Department of Electrical Engineering and the Coordinated Science Laboratory of the University of Illinois at Urbana-Champaign, Monticello, US; V.K. AATRE et al.: "Median filtering"1-48, 1983 000**

(73) Titulaire: **LABORATOIRES D'ELECTRONIQUE PHILIPS, 3, Avenue Descartes, F-94450 Limeil-Brévannes(FR)**

(84) Etats contractants désignés: **FR**

(73) Titulaire: **N.V. Philips' Gloeilampenfabrieken, Groenewoudseweg 1, NL-5621 BA Eindhoven(NL)**

(84) Etats contractants désignés: **DE GB IT SE**

(72) Inventeur: **Fonsalas, Frédéric, Société Civile S.P.I.D. 209 rue de l'Université, F-75007 Paris(FR)**

(74) Mandataire: **Chaffraix, Jean, Société Civile S.P.I.D. 209, rue de l'Université, F-75007 Paris(FR)**

**Description**

La présente invention concerne un procédé de renforcement de transitions de signaux comportant une zone de transition entre des zones d'amplitude faible et d'amplitude élevée et opérant par multiplexage d'échantillons traités pendant la durée de ladite zone de transition et d'échantillons non traités pour les parties de signaux situées hors de ladite zone.

L'invention concerne également un dispositif de traitement pour la mise en oeuvre du procédé selon la revendication 1, comprenant des moyens de multiplexage des échantillons du signal d'entrée traités pendant la durée de la zone de transition et des échantillons non traités situés hors de ladite zone.

Ces procédé et dispositif sont applicables notamment au renforcement des contours d'images et tout particulièrement au renforcement des contours de chrominance ou de luminance dans le cas d'images de télévision, par exemple lors de la réception de signaux vidéofréquence codés selon un standard MAC, pour améliorer la qualité subjective de l'image.

Un procédé et un dispositif de ce type sont décrits sur la figure 8 de l'article "Adaptive Techniken bei der digitalen Videosignalverarbeitung in Farbfernsehempfängern" de M. Jacobsen, paru dans la revue Fernseh- und Kinotechnik, n°6/1983, pages 245-250. Mais il apparaît en fait que ce procédé réalise seulement un redressement du flanc de transition du signal, par interpolation à partir de quelques points de celui-ci.

Un but de l'invention est de proposer un procédé de renforcement des contours visant, de façon plus large, à améliorer la qualité subjective du signal par un remplacement de la partie de celui-ci située dans la zone de transition.

A cet effet, l'invention concerne un procédé comme indiqué ci-dessus et caractérisé en ce qu'il comprend, préalablement audit multiplexage, essentiellement les opérations suivantes :

- normalisation du signal d'entrée pendant la durée de la zone de transition, destinée à ramener la valeur du premier point d'échantillonnage à 0 et celle du dernier point à 1 ;
- traitement de transformation destiné à remplacer la valeur de chaque échantillon de la zone de transition par une autre valeur selon une fonction de transformation déterminée indépendante des valeurs du signal en dehors de la zone de transition et symétrique par rapport au point 1/2.
- dénormalisation du signal ainsi transformé pour retrouver la dynamique initiale du signal d'entrée.

Ce procédé selon l'invention ne se contente ps de rendre des transitions plus raides, mais offre la possibilité de moduler à volonté l'effet de renforcement des transitions.

Dans un mode particulier de sa mise en oeuvre, le procédé selon l'invention est caractérisé en ce que ledit traitement est une transformation polynomiale tendant à remplacer x par un polynôme P(x) lorsque x est inférieur à 1/2 et x par le polynôme 1-P(1-x) lorsque x est compris entre 1/2 et 1 ou égal à l'une de ces deux valeurs.

Un autre but de l'invention est de proposer un dispositif avantageux de mise en oeuvre de ce procédé.

L'invention concerne à cet effet un dispositif de traitement comme indiqué ci-dessus et caractérisé en ce que lesdits moyens de multiplexage sont précédés d'une première voie de transfert des échantillons d'entrée non traités et, en parallèle sur celle-ci, d'une deuxième voie de transfert des échantillons d'entrée traités, ladite deuxième voie de transfert comprenant elle-même :

(1) un circuit de calcul du signe de la dérivée du signal d'entrée, composé :
(a) d'un premier circuit à retard retardant le signal d'entrée d'une période d'échantillonnage T ;
(b) d'un premier soustracteur recevant d'une part la sortie $x_{n-1}$ du premier circuit à retard sur son entrée positive et d'autre part directement l'échantillon d'entrée $x_n$ sur son entrée négative ;
(c) d'un circuit logique de commande recevant la sortie dudit soustracteur et délivrant des créneaux correspondant aux transitions du signal d'entrée et d'amplitude opposée selon que le signe de $x_{n-1}-x_n$ est positif ou négatif ;
(2) un circuit de normalisation composé :
(d) d'une part, d'une première mémoire "1 point", qui stocke la valeur du premier point de la zone de transition, et d'un deuxième soustracteur retranchant cette valeur de celle de tous les échantillons suivants, qui arrive directement sur l'autre entrée de ce soustracteur ;
(e) d'autre part, en sortie de ce deuxième soustracteur, d'une deuxième mémoire "1 point" stockant la valeur du dernier point de la zone de transition, d'un circuit d'inversion de ladite valeur, d'un premier multiplieur de cette valeur inverse par chacune des valeurs de sortie du deuxième soustracteur transmises à l'autre entrée dudit multiplieur par l'intermédiaire d'un deuxième circuit à retard ;
(3) un circuit de transformation de chaque valeur de sortie x du premier multiplieur par un polynôme P(x) ou une fonction F(x) si x n'est pas supérieur à 1/2, ou par un polynôme 1 - P(1-x) ou une fonction 1 - F(1-x) si x est supérieur à 1/2 ;
(4) un circuit de dénormalisation composé :
(f) d'une part, d'un deuxième multiplieur recevant la sortie du circuit de transformation et celle d'un premier registre de stockage de la valeur précédemment stockée dans la deuxième mémoire "1 point" ;
(g) d'autre part, d'un additionneur de la sortie dudit deuxième multiplieur et de la sortie d'un deuxième registre de stockage de la valeur précédemment stockée dans la première mémoire "1 point" ; la sortie dudit additionneur constituant la sortie de la deuxième voie de transfert, et le circuit logique de commande délivrant les différents ordres de lecture ou d'écriture des mémoires ou registres du dispositif.

Les particularités et avantages de l'invention apparaîtront maintenant de façon plus précise dans la description qui suit et dans les dessins annexés, donnés à titre d'exemples non limitatifs et dans lesquels :

- les figures 1a, 1b, 1c montrent respectivement un exemple de signal d'origine à traiter, la courbe correspondante -en créneaux- donnant le signe de la dérivée dudit signal d'origine, et cette même courbe du signe de la dérivée mais avec une limitation du premier créneau qui, trop long, a été divisé en deux créneaux plus courts ;
- la figure 2 montre un exemple de réalisation de dispositif de traitement pour la mise en oeuvre du procédé selon l'invention ;
- les figures 3a à 3c montrent trois exemples de renforcement de contours obtenus par des transformations polynomiales faisant appel à des polynômes respectivement du type en $x^2$, en $2^{p-1} x^p$, et en $ax^3 + bx$.

On supposera tout d'abord, dans le cas présent, que l'objet du traitement à effectuer est une image se présentant sous la forme d'un tableau dont les lignes représentent les échantillons dans la direction horizontale et les colonnes les échantillons dans la direction verticale, le renforcement de contour étant effectué dans l'une de ces deux directions. On supposera aussi que le signal d'entrée est échantillonné avec une fréquence d'échantillonnage suffisamment importante devant sa bande passante, afin que les transitions du signal se fassent sur un nombre de points suffisant (au moins 4 ou 5 par exemple).

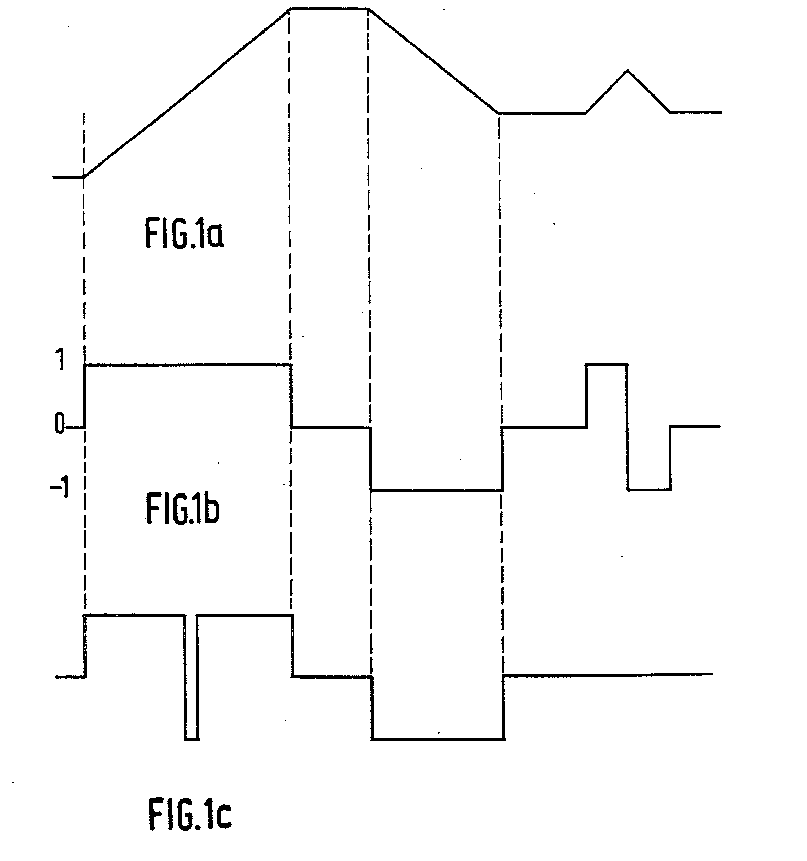

Le procédé de renforcement de contour selon l'invention est alors le suivant. On calcule dans un premier temps le signe de la dérivée du signal, à partir de la différence entre deux échantillons successifs $(x_{n-1}, x_n)$, ce signe étant exprimé par 1, 0, ou -1 selon que ladite différence $x_n - x_{n-1}$ est positive, nulle ou négative. Pour un signal d'origine tel que celui représenté sur la figure 1a, le signe de la dérivée est donné par la courbe de la figure 1b. Dans un deuxième temps, on impose aux signaux en créneaux ainsi obtenus une limitation supérieure pour éviter de redresser brutalement des zones comportant des transitions douces sur un grand nombre de points, par exemple des zones où s'effectue un passage progressif de l'ombre à la lumière. C'est ce morcellement en deux créneaux plus brefs qui est réalisé sur la partie gauche de la figure 1c. Dans un troisième temps, on effectue une opération dite de normalisation des transitions, destinée à ramener la valeur du premier point à 0 et celle du dernier point à 1.

Dans un quatrième temps, qui constitue l'étape essentielle du procédé selon l'invention, on opère une transformation polynomiale, les polynômes utilisables pouvant être très variés pour s'adapter au cas à traiter, ou même une transformation utilisant d'autres fonctions telles que des exponentielles, des Arctangentes, etc... Enfin, après une telle transformation, on effectue une opération de dénormalisation, inverse de l'opération de normalisation précédente, pour retrouver la dynamique initiale, puis on assure le multiplexage des échantillons traités pendant la période de transition du signal et de ceux, non traités, qui sont situés avant ou après cette période, afin de retrouver un signal complet.

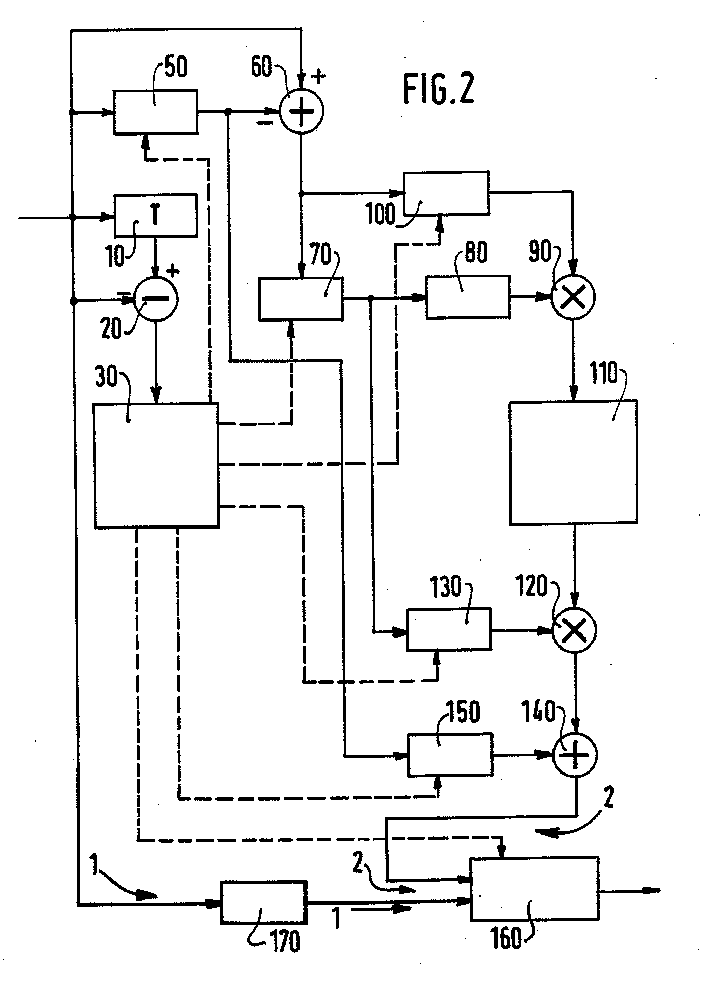

On décrira maintenant une application particulière de ce procédé au renforcement des contours ou transitions en couleurs d'un signal de télévision codé selon le standard D2-MAC-paquets. Cette description est effectué en liaison avec la figure 2 montrant un mode de réalisation d'un dispositif de mise en oeuvre du procédé dans le cas de cette application. On précisera préalablement que le traitement est appliqué dans la direction horizontale, c'est-à-dire suivant les lignes de balayage du système d'analyse des images, avec, dans l'exemple décrit, une fréquence d'échantillonnage des signaux de différence de couleur de 13,5 mégahertz et une bande passante de ces signaux d'environ le cinquième de cette valeur. Ces caractéristiques ont conduit à une segmentation en n segments des transitions comportant un nombre de points supérieur à n x 10.

Le dispositif de la figure 2 comprend tout d'abord un circuit (10, 20, 30) de calcul du signe de la dérivée du signal d'entrée, composé d'un premier circuit à retard 10, d'un premier soustracteur 20 et d'un circuit logique de commande 30. Le circuit à retard 10 retarde ledit signal d'entrée d'une période d'échantillonnage T, et le soustracteur 20 reçoit d'une part la sortie $x_{n-1}$ du circuit à retard 10 et d'autre part directement le signal d'entrée $x_n$. Le circuit logique de commande 30, qui reçoit la sortie du soustracteur 20, génère alors des créneaux correspondant aux transitions du signal d'entrée et d'amplitude +1 ou -1 selon que le signe de $x_{n-1}-x_n$ est positif ou négatif. Simultanément, le circuit 30 segmente ceux de ces créneaux qui ont une durée supérieure à un autre seuil fixé à dix périodes d'échantillonnage, cette segmentation étant opérée en autant de segments que nécessaire pour qu'aucun ne dépasse le seuil fixé. Enfin, ce circuit 30 génère les différents ordres de lecture ou d'écriture des mémoires ou registres utilisés dans l'ensemble du dispositif.

Ce dispositif comprend ensuite un circuit (50, 60, 70, 80, 90, 100) de normalisation. Ce circuit de normalisation comprend lui-même une première mémoire "1 point" 50, qui stocke la valeur du premier point de la transition, et un deuxième soustracteur 60, qui retranche cette valeur de celle de tous les échantillons suivants. Le circuit de normalisation comprend également, en sortie du soustracteur 60, une deuxième mémoire "1 point" 70 qui stocke la valeur de la différence entre le dernier et le premier point de la transition, une mémoire morte 80, qui fournit l'inverse de cette valeur stockée, et un premier multiplieur 90 de cette valeur inverse par chacune des valeurs de sortie du soustracteur 60 transmises à l'autre entrée du multiplieur par l'intermédiaire d'un deuxième circuit à retard 100 jouant un rôle de compensation de temps de transit. Le signal normalisé, d'abord par action des éléments 50 et 60 puis par action des éléments 70 à 100, est disponible en sortie du multiplieur 90.

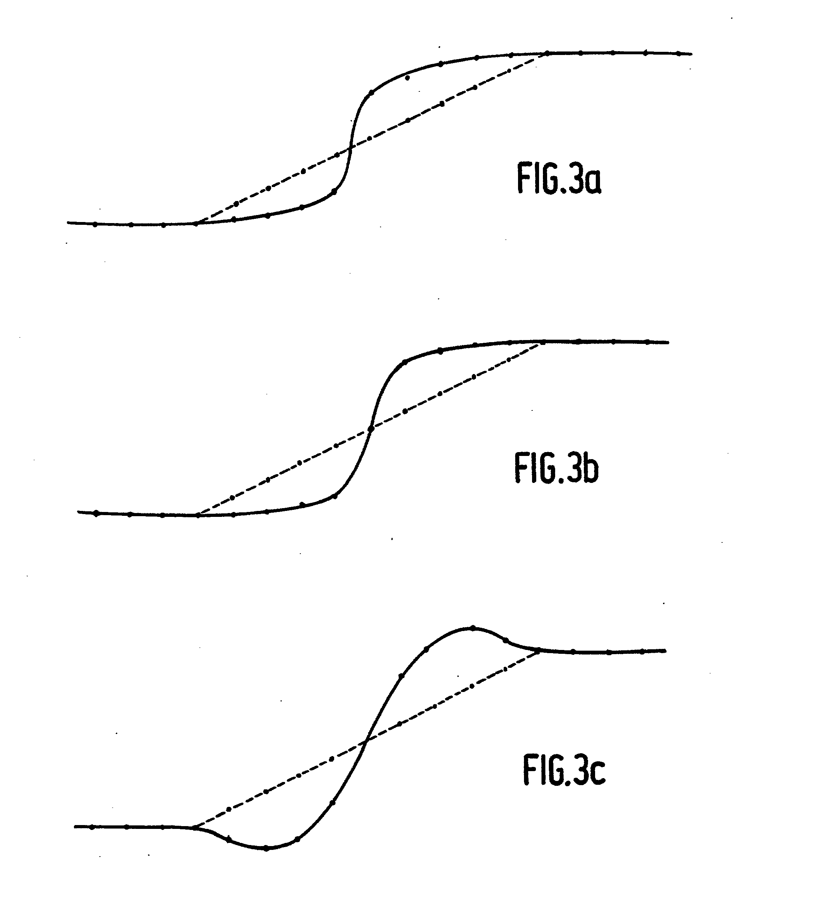

A ce signal normalisé, c'est-à-dire maintenant compris entre 0 et 1, est alors appliquée une transformation polynomiale centrée sur le point d'amplitude 1/2. Dans l'exemple de réalisation ici décrit, le dispositif selon l'invention comprend une mémoire morte 110 de type PROM (de l'anglais Programmable Read-Only Memory) dont la programmation est réalisée à volonté, selon le cas particulier de renforcement de contour que l'on veut effectuer. Les figures 3a à 3c montrent trois exemples distincts de renforcement de contours, obtenus par application de trois types particuliers de transformations polynomiales (le contour d'origine est représenté en trait interrompu et le contour renforcé en trait continu) :

(a) cas d'un polynôme en $x^2$ (figure 3a) : chaque valeur $x$ est remplacée par $x^2$ si $x$ est nul ou compris entre 0 et 1/2, et par $1-(1-x)^2$ si $x$ est compris entre 1/2 et 1 ou égal à l'une de ces deux limites ;

(b) cas d'un polynôme en $2^{p-1}x^p$ (figure 3b): chaque valeur $x$ est de façon similaire remplacée par $2^{p-1}x^p$ ou par $1-2^{p-1}(1-x)^p$ selon la valeur de $x$ ;

(c) cas d'un polynôme en $ax^3 + bx$ (figure 3c) : chaque valeur de $x$ est, de même, remplacée par $ax^3 + bx$ ou par $1-(a(1-x)^3 + b(1-x))$ selon la valeur de $x$, avec des coefficients $a$ et $b$ qui ont par exemple été choisis égaux à $a = 4/(1-12x^2)$ et $b = -3x^2$, où $x_0$ est un coefficient dont la valeur détermine la plus ou moins grande importance du renforcement du contour.

Le dispositif selon l'invention comprend enfin, en sortie de la mémoire 110, un circuit de dénormalisation (120, 130, 140, 150), qui permet de retrouver la dynamique initiale du signal. Ce circuit de dénormalisation comprend à cet effet un multiplieur 120 de la sortie de la mémoire 110 par celle d'un premier registre 130 qui avait conservé en mémoire, en vue de cette multiplication, la valeur du dernier point de la transition utilisée par la deuxième mémoire "1 point" 70 pour l'opération de normalisation, puis un additionneur 140 de la sortie du multiplieur 120 et de celle d'un deuxième registre 150 ayant conservé en mémoire la valeur du premier point de la transition (valeur qui avait été initialement stockée dans la première mémoire "1 point" 50). La sortie de l'additionneur 140, qui délivre le signal dénormalisé, est envoyée vers un multiplexeur 160 qui reçoit par ailleurs la sortie d'un troisième circuit à retard 170 recevant et stockant les échantillons d'entrée et ayant, comme le circuit 100, un rôle de compensation de temps de transit. Ce multiplexeur 160 assure le multiplexage des points non traités, situés avant et après la transition traitée, et qui lui sont transmis par la voie de transfert 1, et des points traités à l'aide des éléments 10 à 150, qui lui sont transmis par la voie de transfert en parallèle 2. La sortie du multiplexeur 160 délivre donc le signal à contours renforcés par rapport au signal d'entrée.

Bien entendu, des connexions de commande relient le circuit logique de commande à la première mémoire "1 point" 50, à la deuxième mémoire "1 point" 70, au troisième circuit à retard 100, au registre 130, au registre 150, et au multiplexeur 160, pour la bonne synchronisation des différentes opérations.

L'invention qui vient d'être décrite n'est, manifestement, pas limitée au mode de réalisation expressément décrit et représenté, à partir duquel des variantes peuvent être proposées sans pour cela sortir du cadre de l'invention. Par exemple, les possibilités du circuit logique de commande 30 peuvent être élargies : on peut notamment demander à ce circuit d'éliminer du signal de commande de la transformation polynomiale les brefs créneaux successifs d'amplitude opposée (un exemple en est représenté sur la partie droite de la figure 1b) qui correspondent à des transitions brutales elles-mêmes dues à du bruit (la figure 1c ne comprend effectivement plus ces créneaux).

Par ailleurs il est manifeste que l'invention est applicable de façon tout à fait générale pour l'amélioration de la qualité subjective de toute image ou représentation au moins bidimensionnelle, c'est-à-dire non seulement dans le domaine de la télévision mais aussi en imagerie médicale ou infrarouge par exemple.

Enfin, la transformation polynomiale décrite comme une opération essentielle du traitement selon l'invention n'est pas le seul type de transformation possible, d'autres modes de transformation à base de logarithmes, d'exponentielles, de fonctions trigonométriques, etc..., pouvant bien entendu être envisagés tout en respectant la symétrie par rapport au point 1/2.

**Revendications**

1. Procédé de renforcement de transitions de signaux comportant une zone de transition entre des zones d'amplitude faible et d'amplitude élevée et opérant par multiplexage d'échantillons traités pendant la durée de ladite zone de transition et d'échantillons non traités pour les parties de signaux situées hors de ladite zone, caractérisé en ce qu'il comprend, préalablement audit multiplexage, essentiellement les opérations suivantes :

- normalisation du signal d'entrée pendant la durée de la zone de transition, destinée à ramener la valeur du premier point d'échantillonnage à 0 et celle du dernier point à 1 ;

- traitement de transformation destiné à remplacer la valeur de chaque échantillon de la zone de transition par une autre valeur selon une fonction de transformation déterminée indépendante des valeurs du signal en dehors de la zone de transition et symétrique par rapport au point 1/2 ;

- dénormalisation du signal ainsi transformé pour retrouver la dynamique initiale du signal d'entrée.

2. Procédé selon la revendication 1, caractérisé en ce que ledit traitement est une transformation polynomiale tendant à remplacer $x$ par un polynôme $P(x)$ lorsque $x$ est inférieur à 1/2 et $x$ par le polynôme $1-P(1-x)$ lorsque $x$ est compris entre 1/2 et 1 ou égal à l'une de ces deux valeurs.

3. Dispositif de traitement pour la mise en oeuvre du procédé selon la revendication 1, comprenant des moyens de multiplexage des échantillons du signal d'entrée traités pendant la durée de la zone de transition et des échantillons non traités situés hors de ladite zone, caractérisé en ce quelesdits moyens de multiplexage sont précédés d'une première voie de transfert des échantillons d'entrée non traités et, en parallèle sur celle-ci, d'une deuxième voie de transfert des échantillons d'entrée traités, ladite deuxième voie de transfert comprenant elle-même :

  (1) un circuit de calcul du signe de la dérivée du signal d'entrée, composé :

    (a) d'un premier circuit à retard (10) retardant le signal d'entrée d'une période d'échantillonnage T ;

    (b) d'un premier soustracteur (20) recevant d'une part la sortie $x_{n-1}$ du premier circuit à retard sur son entrée positive et d'autre part directement l'échantillon d'entrée $x_n$ sur son entrée négative ;

    (c) d'un circuit logique de commande (30) recevant la sortie dudit soustracteur et délivrant des créneaux correspondant aux transitions du signal d'entrée et d'amplitude opposée selon que le signe de $x_{n-1}-x_n$ est positif ou négatif ;

  (2) un circuit de normalisation composé :

    (d) d'une part, d'une première mémoire "1 point" (50), qui stocke la valeur du premier point de la zone de transition, et d'un deuxième soustracteur (60) retranchant cette valeur de celle de tous les échantillons suivants, qui arrive directement sur l'autre entrée de ce soustracteur ;

    (e) d'autre part, en sortie de ce deuxième soustracteur, d'une deuxième mémoire "1 point" (70) stockant la valeur de la différence entre le dernier et le premier point de la zone de transition, d'un circuit d'inversion (80) de ladite valeur, d'un premier multiplieur (90) de cette valeur inverse par chacune des valeurs de sortie du deuxième soustracteur transmises à l'autre entrée dudit multiplieur par l'intermédiaire d'un deuxième circuit à retard (100);

  (3) un circuit de transformation (110) de chaque valeur de sortie x du premier multiplieur par un polynôme P(x) ou une fonction F(x) si x n'est pas supérieur à 1/2, ou par un polynôme 1 - P(1-x) ou une fonction 1-F(1-x) si x est supérieur à 1/2 ;

  (4) un circuit de dénormalisation composé :

    (f) d'une part, d'un deuxième multiplieur (120) recevant la sortie du circuit de transformation et celle d'un premier registre (130) de stockage de la valeur précédemment stockée dans la deuxième mémoire "1 point" ;

    (g) d'autre part, d'un additionneur (140) de la sortie dudit deuxième multiplieur et de la sortie d'un deuxième registre (150) de stockage de la valeur précédemment stockée dans la première mémoire "1 point" ;

la sortie dudit additionneur constituant la sortie de la deuxième voie de transfert, et le circuit logique de commande délivrant les différents ordres de lecture ou d'écriture des mémoires ou registres du dispositif.

## Patentansprüche

1. Verfahren zur Signalflankenversteilerung mit einer Übergangszone zwischen Zonen geringer und großer Amplitude, durch Multiplexierung von Abtastwerten, die während der Dauer der genannten Übergangszone behandelt werden, und von nichtbehandelten Abtastwerten für Teile der Signale die außerhalb der genannten Zone liegen, dadurch gekennzeichnet, daß das Verfahren vor der genannten Multiplexierung die folgenden Verfahrensschritte aufweist:

- Normalisierung des eintreffenden Signals während der Dauer der Übergangszone, bestimmt zum Zurückbringen des Wertes des ersten Abtastpunktes auf 0 und des Wertes des letzten Punktes auf 1;
- Durchführung einer Transformation zum Ersetzen des Wertes jeder Abtastung der Übergangszone durch einen anderen Wert entsprechend einer Transformationsfunktion, die unabhängig von den Werten des Signals außerhalb der Übergangszone und symmetrisch gegenüber dem Punkt 1/2 ermittelt ist;
- Denormalisierung des auf diese Weise transformierten Signals zum Zurückbringen der Anfangsdynamik des Eingangssignals.

2. Verfahren nach Anspruch 1, dadurch gekennzeichnet, daß die genannte Durchführung eine polynomische Transformation betrifft zum Ersetzen von x durch ein Polynom P(x), wenn x geringer ist als 1/2, und zum Ersetzen von x durch das Polynom 1-P(1-x), wenn x einen Wert hat zwischen 1/2 und 1 oder einem dieser Werte entspricht.

3. Anordnung zum Durchführen des Verfahrens nach Anspruch 1, mit Mitteln zum Multiplexieren der Abtastwerte des Eingangssignals, die während der Dauer der Übergangszone behandelt werden, und der nicht behandelten Abtastwerte, die außerhalb der genannten Zone liegen, dadurch gekennzeichnet, daß den genannten Multiplexierungsmitteln eine erste Übertragungsstrecke der nicht behandelten Eingangs-Abtastwerte vorhergeht, und parallel zu derselben, eine zweite Übertragungsstrecke der behandelten Eingangs-Abtastwerte, wobei die zweite Übertragungsstrecke an sich die folgenden Elemente aufweist:

  (1) eine Schaltungsanordnung zum Berechnen des Vorzeichens der Abgeleiteten des Eingangssignals, wobei diese Anordnung aus den folgenden Teilen besteht:

    (a) einer ersten Verzögerungsschaltung (10), die das Eingangssignal um eine Abtastperiode T verzögert;

    (b) einer ersten Subtrahierschaltung (20), die einerseits an dem positiven Eingang das Ausgangssignal $x_{n-1}$ der ersten Verzögerungsschaltung erhält und andererseits am negativen Eingang unmittelbar den Eingangs-Abtastwert $x_n$;

    (c) einer logischen Steuerschaltung (30) die das Ausgangssignal der genannten Subtrahierschaltung erhält und Rechteckimpulse liefert, entsprechend den Übergängen des Eingangssignals und mit einer entgegengesetzten Amplitude, abhängig davon, ob das Vorzeichen von $x_{n-1}-x_n$ positiv oder negativ ist;

  (2) eine Normalisierungsanordnung, die aus den folgenden Teilen besteht:

    (d) einerseits einem ersten «1 Punkt» Speicher (50), der den Wert des ersten Punktes der Übergangszone speichert, und einer zweiten Subtrahierschaltung (60), die diesen Wert von demjenigen der nachfolgenden Abtastwerte subtrahiert, der unmittelbar an dem anderen Eingang dieser Subtrahierschaltung eintrifft;

(e) andererseits, am Ausgang dieser zweiten Subtrahierschaltung, einem zweiten «1 Punkt» Speicher (70), der den Wert der Differenz zwischen dem letzten und dem ersten Punkt der Übergangszone speichert, einer Umkehrschaltung (80) zum Umkehren des genannten Wertes, einem ersten Multiplizierer (90) zum Multiplizieren dieses umgekehrten Wertes mit jedem der Ausgangswerte der zweiten Subtrahierschaltung, die mittels einer zweiten Verzögerungsschaltung (100) zu dem anderen Eingang des genannten Multiplizierers übertragen worden sind;

(3) eine Transformationsschaltung (110) zur Durchführung einer Transformation für jeden Ausgangswert x des ersten Multiplizierers durch ein Polynom P(x) oder eine Funktion F(x), falls x nicht größer ist als 1/2, oder durch ein Polynom 1–P(1–x) oder eine Funktion 1–F(1–x), falls x größer ist als 1/2;

(4) eine Denormalisierungsanordnung, die aus den folgenden Teilen besteht:

(f) einerseits, einem zweiten Multiplizierer (120), der das Ausgangssignal der Transformationsschaltung und das eines ersten Registers (130) zum Speichern des vorher in dem zweiten «1 Punkts» Speicher gespeicherten Wertes, erhält;

(g) andererseits, einem Addierer (140) für das Ausgangssignal des zweiten Multiplizierers und des Ausgangssignals eines zweiten Registers (150) zum Speichern des vorher in den ersten «1 Punkt» Speicher gespeicherten Wertes; wobei das Ausgangssignal des genannten Addierers das Ausgangssignal der zweiten Übertragungsstrecke bildet und wobei die logische Steuerschaltung die jeweiligen Ausleseoder Schreibbefehle der Speicher oder Register der Anordnung liefert.

**Claims**

1. A method of improving signal transients having a transition zone between low-amplitude and high-amplitude zones, the method utilizing the multiplexing of samples processed during the transition zone and non-processed samples for signal portions located outside said zone, characterized in that the method comprises, effected previous to said multiplexing operation, the following steps:

– normalisation of the input signal during the transition zone, intended to normalise the value of a first signal sample element to 0 and the value of the last signal sample element to 1;

– transformation operations for replacing the value of each transition zone sample by another value in accordance with a predetermined transformation function independent of the signal values which are located outside the transition zones, the transformation function being symmetrical with respect to the value 1/2,

– denormalisation of the signal thus transformed to recover the initial dynamics of the input signal.

2. A method as claimed in claim 1, characterized in that said processing is a polynomial transformation replacing a transient sample value x by a polynomial value P(x) when x is less than one half, and by a polynomial value $1 - P(1-x)$ when x is comprised between 1/2 and 1 or is equal to one of these two values.

3. A processing arrangement for putting the method as claimed in claim 1 into effect, comprising multiplexing means for multiplexing input signal samples processed during the duration of the transition zone, and non-processed samples located outside said zone, characterized in that said multiplexing means are preceded by a first path for transferring non-processed input samples, and parallel thereto a second path for transferring processed input samples, said second transfer path comprising:

(1) a sign calculating circuit for calculating the sign of the derivative of the input signal, including:

(a) a first delay circuit (10) delaying the input signal by a sampling period T;

(b) a first subtractor (20) receiving the output $x_{n-1}$ from the first delay circuit at its positive input and also directly the input sample $x_n$ at its negative input:

(c) a logic control circuit (30) receiving the output from said subtractor and supplying square waves corresponding to the transitions in the input signal, and having opposite amplitudes depending on whether the sign of $x_{n-1}$ is positive or negative;

(2) a normalisation circuit including:

(d) on the one hand, a first "1 point" memory (50) storing the value of the first point of the transition zone, and a second subtractor (60) subtracting this value from the value of all the subsequent samples which arrive directly at the other input of this subtractor;

(e) on the other hand, arranged at the output of this second subtractor, a second "1 point" memory (70) storing the value of the difference between the last and the first point of the transition zone, a circuit (80) for inverting the said value, a first multiplier (90) for multiplying this inverse value by each output value of the second subtractor conveyed to the other input of the said multiplier via a second delay circuit (100);

(3) a transformation circuit (110) for transforming each output value x of the first multiplier by a polynomial P(x) or a function F(x) if x does not exceed 1/2, or by a polynomial 1–P(1–x) or a function 1–F(1–x) if x exceeds 1/2,

(4) a denormalisation circuit including:

(f) on the one hand, a second multiplier (120) receiving the output of the transformation circuit and the output of a first storage register (130) storing the value which was previously stored in the second "1 point" memory,

(g) on the other hand, an adder (140) for adding together the output value of the second amplifier and the output value of a second storage register (150) storing the value previously stored in the first "1 point" memory; the output of the said adder constituting the output of the second transfer path, and the logic control circuit producing the different read and write sequences for the memories or registers of the arrangement.

FIG.1a

FIG.1b

FIG.1c

**EP 0 237 115 B1**

FIG.2

FIG.3a

FIG.3b

FIG.3c